Europäisches Patentamt

European Patent Office

Office européen des brevets

(11) Publication number: **0 181 338 B1**

# EUROPEAN PATENT SPECIFICATION

(45) Date of publication of patent specification: **22.07.92**   (51) Int. Cl.⁵: **F16K 47/00,** F17D 1/20

(21) Application number: **84903568.8**

(22) Date of filing: **17.09.84**

(86) International application number:
**PCT/SE84/00304**

(87) International publication number:
**WO 85/01564 (11.04.85 85/09)**

The file contains technical information submitted
after the application was filed and not included in
this specification

(54) **SECTION VALVE COUNTERACTING PRESSURE TRANSIENTS IN PIPE SYSTEMS.**

(30) Priority: **27.09.83 SE 8305200**

(43) Date of publication of application:
**21.05.86 Bulletin 86/21**

(45) Publication of the grant of the patent:
**22.07.92 Bulletin 92/30**

(84) Designated Contracting States:
**AT BE CH DE FR GB LI NL SE**

(56) References cited:
CH-A- 567 220      FR-A- 1 590 229
FR-A- 2 506 420    US-A- 2 547 116
US-A- 3 883 113    US-A- 4 272 056
US-A- 4 304 393

(73) Proprietor: **FLUDEX AB
Juteskärsgatan 44
S-421 59 V. Frölunda(SE)**

(72) Inventor: **GUSTAFSON, Bror-Arne
Juteskärsgatan 44
S-421 59 V. Frölunda(SE)**

(74) Representative: **Mossmark, Anders et al
Albihn West AB Stora Nygatan 15
S-411 08 Göteborg(SE)**

EP 0 181 338 B1

## Description

The present invention relates to a section valve according to the preamble of claim 1. A continuous regulation valve having these features is known from FR-A-2506420. The valve according to this document is provided with perforated plates for suppressing turbulence when the valve is nearly closed. This document does not, however, address the problems inherent with section valve operation.

Pipe systems must have valves for sectioning purposes. Section valves are typically used to shut off pipelines, to isolate components in the system or to create alternative ways for the flow through the pipe network. The reasons for sectioning are several: Shutting off for maintenance or removal, sectioning for improved flow distribution, adjustments due to load changes, on/off flow control etc. Examples of pipe systems, where sectioning is a common event are: Networks for district heating, distribution systems for drinking water, pipelines for raw water and sewerage, industrial pipe systems for cooling water and process liquids, pipelines for irrigation and fire-fighting and the like.

During a valve manoeuvre pressure fluctuations occur (pressure transients, hydraulic transients, pressure surges, water hammer ...), which often overload the pipe and have given cause to pipe ruptures or to other serious damages to plants. Pressure transients occur during valve closures as well as during valve openings.

The invented section valve counteracts pressure transients and reduces the pressure fluctuations during a valve manoeuvre to acceptable strength with reference to the pressure load of the pipe system.

The only method, which up to now has been available for sectioning long pipelines 'with credit', is that of combining two valves. The main valve is of a dimension similar to the pipe and has a low pressure loss. The by-pass-valve is considerably smaller and connected to the pipe in parallell with the main valve. The shut off process starts with the closure of the main valve, while the by-pass-valve is still in open position. Then the by-pass-valve is closed slowly. The procedure of a valve opening is carried out in reversed order.

## Brief description of the drawings

The invention according to Claim 1 enables the same effect, i.e. reduction of the strength of the pressure transients, to be obtained by means of specially shaped flow channels within the valve with or without the assistance of a matching actuator.

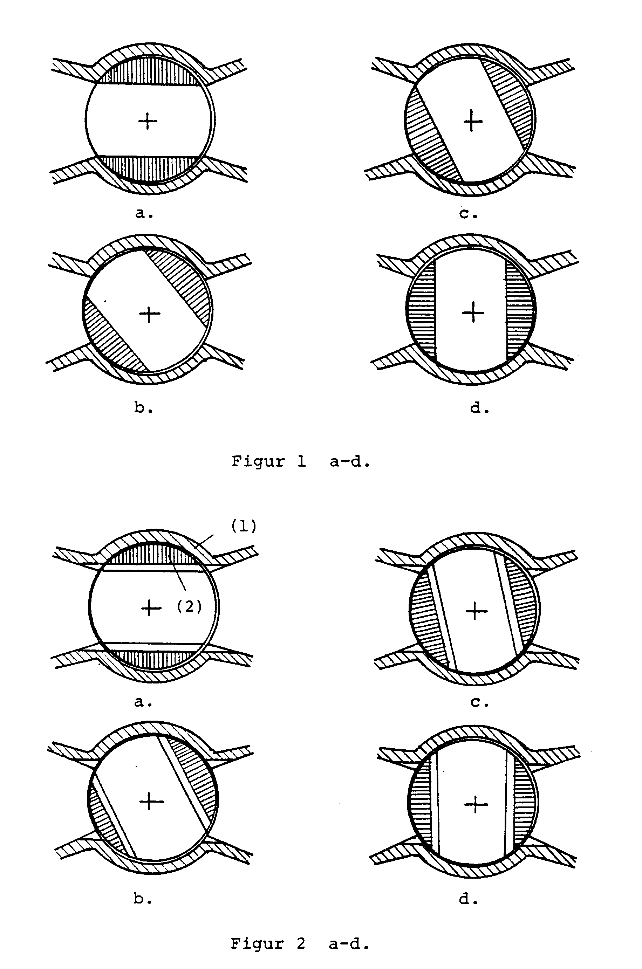

A conventional valve closure can be described by means of four more or less clearly defined positions (figure 1).

| | |
|---|---|
| a) Completely opened valve (figure 1a) | i.e. the least possible pressure loss |
| b) Throttling position (figure 1b) | i.e. when sufficiently large pressure drop initiates a noticeable flow reduction |
| c) Hydraulic closed position (figure 1c) | i.e. when there is no flow through the valve, except for possible leakage |
| d) Completely closed valve (figure 1d) | i.e. when the valve must be completely tight |

The far too rapid deceleration of the flow between "throttling position" and "hydraulic closed position" during a conventional valve closure is the principal cause for strong pressure transients.

The corresponding positions for the invented section valve counteracting pressure transients are illustrated in figure 2.

During a valve closure the plug (2) moves at high speed from "completely opened position" (figure 2a) to "throttling position" (figure 2b). Closed to (at, slightly before or slightly after) "throttling position" low speed is applied. After "hydraulic closed position" (figure 2c) high speed can again be applied for the transport to "completely closed position" (figure 2d).

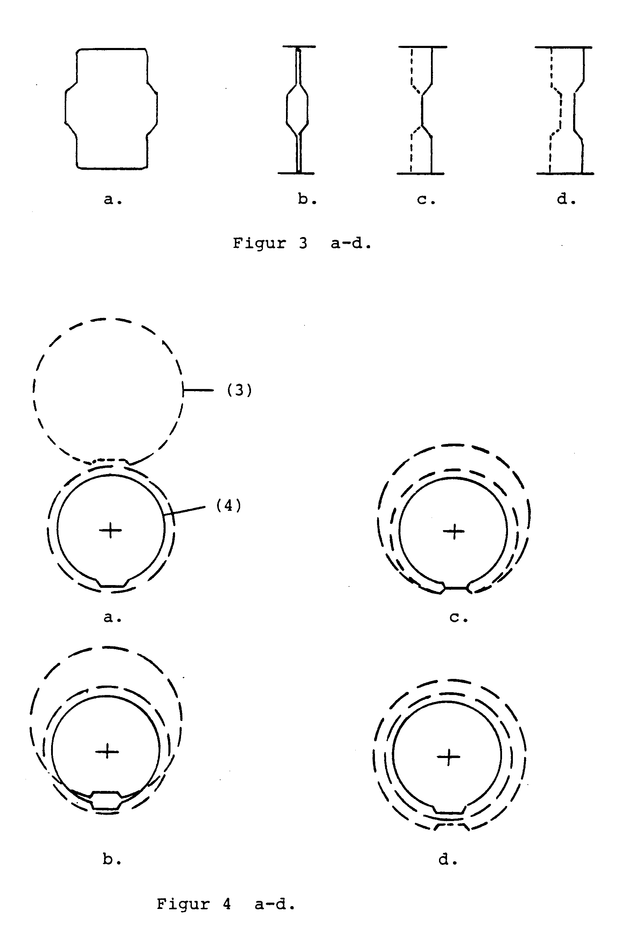

"Throttling position" is characterized by the fact that cutouts or the like in the valve housing (seat, ...) or in the plug (ball, disk, sector, ...) or in both create a through-flow channel of suitable size. The size of the through-flow area is chosen with respect to the acceptable pressure change, which depends on the flow velocity in the connected pipe, the pressure waves propagation speed and the detailed design of the valve. The through-flow area in "throttling position" is in the order of 2-20% of the cross-section area of the connected pipe with 5% as a typical value. The change of the through-flow area with the valve stroke is illustrated in figure 3 a-d.

The shape of the through-flow area in "throttling position" is characterized by the fact that the change of the area ratio (through-flow area/cross-section area of connected pipe) with the valve stroke becomes considerably less at valve strokes less than in "throttling position". In this way the change of flow rate per unit time is reduced.

Figure 4 a-d illustrates an example of how the section valve counteracting pressure transients can be designed in case of a gate valve.

In some applications the valve manoeuvre can be performed with one and the same speed. The reduction of pressure transients will, however, be most effective with a matching actuator with variable speed. Such an actuator must have at least one high and one low speed. Low speed is applied at, slightly before or slightly after "throttling position". Correspondingly, low speed is applied from "hydraulic closed position" to "throttling position" during a valve opening. High speed can be used for the transport from "completely opened valve" to "throttling position", and from "hydraulic closed position" to "completely closed valve" or between the mentioned positions in reversed order.

Typical for the invention with reference to the actuator is that low speed is applied between "throttling position" and "hydraulic closed position" or between the same positions in reversed order. The time for the manoeuvre from "throttling position" to "hydraulic closed position" is determined due to acceptable strength of the pressure transients, which depend on the length of the pipe system connected to the valve, the propagation speed of the pressure waves in the pipes and the stationary flow velocity. The manoeuvre time, therefore, has to be selected from case to case. Typical values, however, are in the order of 10-300 secs.

The valve opening process is performed in a similar way but in reversed order with respect to time.

## Claims

1. A section valve counteracting pressure transients in pipe systems for liquids preferably with dimensions greater than DN100 mm and with total pipe length greater than 100 m, said pipe system including pipes to which said valve is arranged to be connected and which have a predetermined cross-sectional area, said valve including a valve housing (1) and a movable valve member (2) arranged to perform valve stroke movements in said valve housing, said valve member forming together with said housing a through-flow channel for said liquids, said through-flow channel having a cross-sectional area which is changeable by means of said valve stroke movements, and further including an outer driven actuator for the manoeuvring of the movable valve member with a predetermined speed between a fully open position and a fully closed position, characterized in that the cross-section perimeter of the through-flow channel is unbroken, i.e. the cross-sectional area of the through-flow channel is everywhere delimited by one continuous boundary line, wherein said valve housing or said movable valve member or both are provided with a cut-out portion extending through the whole of said through-flow channel which forms part of said boundary line, said cut-out portion, in a plane perpendicular to the through-flow direction, being trough-shaped and being provided with two oblique sides converging to a base of the trough to give the trough a certain depth, wherein said depth is considerably less than the width of the trough, so that the change of area ratio (through-flow area of the valve/cross-sectional area of connected pipe) with the valve stroke is given a significantly different character at a throttling position of the valve, i.e. when said area ratio is in the order of 2-20 %, in that the change of area ratio with valve stroke is considerably less in the neighbourhood of said throttling position when compared with the change of area ratio with valve stroke during displacement of the valve body between said fully open position and said throttling position.

2. A section valve counteracting pressure transients according to claim 1, **characterized** by the fact that the movable valve member (2) is a plug or a ball and that said cut-out portion in the valve housing (1) or in the movable valve member (2) or in both contribute to form the through-flow channel with an unbroken cross-section perimeter.

3. A section valve counteracting pressure transients according to claim 1, **characterized** by the fact that movable valve member (3) is a sliding disc and that said cut-out position in the valve housing (4) or in the movable valve (3) or in both contribute to form the through-flow channel with an unbroken cross-section perimeter.

4. A section valve counteracting pressure transients according to claim 1, **characterized** by the fact that the manoeuvre speed of the driven actuator is variable with at least one high and one low operation speed and that during a valve closure the movable valve member is manoeuvred with high speed to a

EP 0 181 338 B1

position in the neighbourhood of the throttling position and with low speed from the position in the neighbourhood of the throttling position to said closed position.

5.  A section valve counteracting pressure transients according to claim 1, **characterized** by the fact that the manoeuvre speed of the driven actuator is variable with at least one high and one low operational speed and that during a valve opening the movable valve member is manoeuvred with low speed from said closed position to a position in the neighbourhood of the throttling position and with high speed from the position in the neighbourhood of the throttling position to said completely open position.

## Revendications

1.  Vanne de sectionnement destinée à compenser des variations transitoires de pression dans des circuits de canalisations de liquides, ayant de préférence des dimensions supérieures à DN 100 mm, avec une longueur totale de canalisations supérieure à 100 m, le circuit des canalisations comprenant des canalisations auxquelles la vanne est destinée à être raccordée et qui ont une section prédéterminée, la vanne comportant un boîtier (1) et un obturateur mobile (2) destiné à effectuer des déplacements correpondant à des courses à l'intérieur du boîtier, l'obturateur formant, avec le boîtier, un canal de circulation de liquides, le canal de circulation ayant une section qui peut être modifiée lors des courses de l'obturateur, et comprenant en outre un organe externe de manoeuvre qui est entraîné pour la manoeuvre de l'obturateur mobile avec une vitesse prédéterminée entre une position d'ouverture totale et une position de fermeture totale, la périphérie de la section du canal de circulation n'étant pas divisée, c'est-à-dire que la section du canal de circulation est partout délimitée par une ligne limite continue, le boîtier de la vanne ou l'obturateur mobile ou les deux ayant une partie découpée disposée dans la totalité du canal de circulation et qui fait partie de la ligne limite, la partie découpée, dans un plan perpendiculaire à la direction de circulation, ayant une configuration de rigole ayant deux côtés obliques convergents vers une base de la rigole afin que celle-ci possède une certaine profondeur, la profondeur étant considérablement inférieure à la largeur de la rigole, si bien que la variation du rapport des sections (section de circulation de la vanne/section de la canalisation raccordée) lors de la course de l'obturateur présente un caractère nettement différent dans une position d'étranglement de l'obturateur, c'est-à-dire lorsque le rapport des sections est de l'ordre de 2 à 20 %, parce que le changement du rapport des sections lors de la course de l'obturateur est bien inférieur, à proximité de la position d'étranglement, au changement du rapport des sections avec la course de l'obturateur pendant le déplacement du corps de l'obturateur entre la position d'ouverture totale et la position d'étranglement.

2.  Vanne de sectionnement destinée à compenser des variations transitoires de pression selon la revendication 1, caractérisée par le fait que l'obturateur mobile (2) est un boisseau ou une sphère, et la partie découpée dans le boîtier (1) de la vanne ou dans l'obturateur mobile (2) ou dans les deux contribue à la formation d'un canal de circulation ayant une périphérie continue en coupe.

3.  Vanne de sectionnement destinée à compenser les variations transitoires de pression selon la revendication 1, caractérisée par le fait que l'obturateur mobile (3) est un disque coulissant, et la partie découpée formée dans le boîtier (4) de la vanne ou dans l'obturateur mobile (3) ou dans les deux contribue à la formation du canal de circulation avec une périphérie continue en coupe.

4.  Vanne de sectionnement destinée à compenser les variations transitoires de pression selon l'une quelconque des revendications 1 à 3, caractérisée par le fait que la vitesse de manoeuvre de l'organe de manoeuvre qui est entraîné est variable avec au moins une vitesse élevée et une faible vitesse de manoeuvre, et en ce que, pendant une fermeture de la vanne, l'obturateur mobile est manoeuvré avec une vitesse élevée vers une position qui est voisine de la position d'étranglement, et avec une faible vitesse de la position voisine de la position d'étranglement à la position de fermeture.

5.  Vanne de sectionnement destinée à compenser les variations transitoires de pression selon l'une quelconque des revendications 1 à 3, caractérisée par le fait que la vitesse de manoeuvre de l'organe de manoeuvre qui est entraîné est variable avec au moins une vitesse élevée et une faible vitesse de fonctionnement, et en ce que, pendant l'ouverture de la vanne, l'obturateur mobile est manoeuvré avec une faible vitesse de la position de fermeture à une position voisine de la position d'étranglement, et à une vitesse élevée de la position voisine de la position d'étranglement jusqu'à la position d'ouverture totale.

4

**Patentansprüche**

1. Ein in Rohrleitungen auftretende Druckstöße neutraliesierendes Rohrabschnittventil in Rohrsystemen für Flüssigkeiten, vorzugsweise in solchen mit Abmessungen größer als 100 mm Durchmesser und mit einer Gesamtrohrlänge größer als 100 m, wobei das Rohrsystem Rohre aufweist, mit denen das erwähnte Ventil verbunden ist und die eine vorgegebenen Querschnittsfläche aufweisen, wobei das Ventil ein Ventilgehäuse (1) und ein Ventilelement (2) besitzt, welches für die Durchführung einer Ventilbewegung in dem erwähnten Ventilgehäuse angeordnet ist, wobei das Ventilelement mit dem Gehäuse einen Durchflußkanal für die erwähnten Flüssigkeiten bildet, der (Durchflußkanal) einen Querschnitt aufweist, welcher mit Hilfe der Ventilbewegungen veränderbar ist, sowie mit einem äußeren, angetriebenen Betätigungselement für die Manövrierung des bewegbaren Ventilelementes mit einer vorgegebenen Geschwindigkeit zwischen einer vollständig offenen Position und einer vollständig geschlossenen Position, dadurch gekennzeichnet, daß die Querschnittsumfangslinie des Durchflußkanals nicht unterbrochen ist, d.h. die Querschnittsfläche des Durchflußkanals an jeder Stelle durch eine kontinuierliche Begrenzungslinie abgegrenzt ist, wobei das erwähnte Ventilgehäuse und/oder das erwähnte bewegbare Ventilelement mit einem ausgeschnittenen Abschnitt versehen sind, der sich durch den gesamten Durchflußkanal erstreckt und Teil der Begrenzungslinie bildet, wobei der ausgeschnittene Abschnitt in einer Ebene senkrecht zur Durchflußrichtung trogförmig ausgebildet ist und mit zwei schrägen zur Basis des Troges hin konvergierenden Seiten versehen ist, um dem Trog eine gewisse Tiefe zu verleihen, wobei die erwähnte Tiefe wesentlich kleiner ist als die Breite des Troges, so daß die Änderung des Flächenverhältnisses (Durchflußfläche des Ventils/Querschnittsfläche des verbundenen Rohres) in Abhängigkeit vom Ventilhub an einer Drosselposition des Ventils, d.h. dann, wenn das erwähnte Flächenverhältnis in der Größenordnung von 2 -20 % liegt, eine signifikant unterschiedliche Charakteristik aufweist, und zwar in der Form, daß die Änderung des Flächenverhältnisses mit der Ventilbewegung in der Nachbarschaft der erwähnten Drosselposition wesentlich geringer ist, und zwar im Vergleich zu der Änderung des Flächenverhältnisses in Abhängigkeit vom Ventilhub während der Bewegung des Ventilelementes zwischen der genannten vollständig offenen Position und der genannten Drosselposition.

2. Ein in Rohrleitungen auftretende Druckstöße neutralisierendes Rohrabschnittventil nach Anspruch 1, dadurch gekennzeichnet, daß das erwähnte bewegbare Element (2) ein Zapfen bzw. Zylinderstück oder eine Kugel ist, und daß der ausgeschnittene Abschnitt in dem Gehäuse (1) und/oder in dem bewegbaren Ventilelement (2) zur Bildung des Durchflußkanals mit einem nicht unterbrochenen Querschnittsumfang beitragen.

3. Ein in Rohrleitungen auftretende Druckstöße neutralisierendes Rohrabschnittsventil nach Anspruch 1, dadurch gekennzeichnet, daß das bewegbare Element (1) eine Schieberscheibe ist, und daß der erwähnte ausgeschnittene Bereich in dem Gehäuse (4) und/oder in dem bewegbaren Ventil (3) dazu beitragen, um den Durchflußkanal mit einem nicht unterbrochenen Querschnittsumfang zu bilden.

4. Ein in Rohrleitungen auftretende Druckstöße neutralisierendes Rohrabschnittsventil nach einem der Ansprüche 1 bis 3, dadurch gekennzeichnet, daß die Betätigungsgeschwindigkeit des angetriebenen Betätigungselementes variierbar ist, und zwar mit wenigstens einer hohen und einer niedrigen Betätigungsgeschwindigkeit, und daß während eines Schließens des Ventils das bewegbare Ventilelement mit hoher Geschwindigkeit an eine Position in der Nähe der Drosselposition und mit niedriger Geschwindigkeit von der Position in der Nähe der Drosselposition in die geschlossene Position bewegt wird.

5. Ein in Rohrleitungen auftretende Druckstöße neutralisierendes Rohrabschnittsventil nach einem der Ansprüche 1 bis 3, dadurch gekennzeichnet, daß die Betätigungsgeschwindigkeit des angetriebenen Betätigungselementes variierbar ist, und zwar mit wenigstens einer hohen und einer niedrigen Betätigungsgeschwindigkeit, und daß während eines Öffnens des Ventils das bewegbare Ventilelement mit niedriger Geschwindigkeit aus der geschlossenen Stellung in eine Position in der Nähe der Drosselposition und mit hoher Geschwindigkeit von der Position in der Nähe der Drosselposition in die vollständig geöffnete Stellung bewegt wird.

Figur 1  a-d.

Figur 2  a-d.

Figur 3  a-d.

Figur 4  a-d.